# EUROPÄISCHE PATENTSCHRIFT

(11) **EP 1 493 601 B1**
(45) Veröffentlichungstag und Bekanntmachung des Hinweises auf die Patenterteilung: **23.09.2009**
(21) Anmeldenummer: 04014922.1
(22) Anmeldetag: 25.06.2004
(51) Int. Cl.: B60J 7/02, B60J 7/043

(54) **Fahrzeugdach**
Vehicle roof
Toit de véhicule

(30) Priorität: 30.06.2003 DE 10329536
(43) Veröffentlichungstag der Anmeldung: 05.01.2005
(73) Patentinhaber: Webasto AG, 82131 Stockdorf (DE)
(72) Erfinder: Ettl, Wolfgang, 82166 Gräfelfing (DE); Reihl, Peter, 82319 Starnberg (DE); Wagner, Adam, 82110 Germering (DE); Gräter, Niko, 38461 Danndorf (DE)
(74) Vertreter: Wiese, Gerhard

(56) Entgegenhaltungen:
- EP-A- 1 314 600
- WO-A-02/096685
- DE-A1- 10 046 129
- DE-A1- 10 140 389
- DE-C1- 19 713 347
- US-B1- 6 659 541

## Beschreibung

Die Erfindung betrifft ein Fahrzeugdach gemäß dem Oberbegriff des Patentanspruchs 1.

Eine derartiges Fahrzeugdach mit einem außen geführten Deckel ist aus der DE 197 13 347 A1 bekannt. Bei der dort gezeigten Anordnung verschiebt ein mittels eines Antriebskabels bewegbarer Schlitten einen unteren Anlenkpunkt eines Ausstellhebels, der in der Mitte mit einem Gleitelement in einer ortsfesten Kulissenbahn geführt ist und dessen oberes Ende mit einem weiteren Gleitelement in einer Kulissenbahn an einem Deckelträger verschiebbar geführt ist. Die Abstützung der Deckelhinterkante bei einer Verschiebung des Deckels wird von einem Abstützhebel übernommen, der unabhängig vom Ausstellhebel vorgesehen ist. Eine derartige Mechanik erfordert wegen der erforderlichen Übergabe vom Ausstellhebel an den Stützhebel eine sehr exakte Fertigung und Montage aller beteiligten Bauteile und einen großen Platzbedarf in der Breite des Fahrzeugs (Y-Richtung) gesehen. Ein ähnliches gattungsgemäßes Fahrzeugdach ist aus der DE 101 40 389 A1 bekannt.

Ein weiteres Fahrzeugdach, bei dem eine erste Kulissenbahn für ein vorderes Gleitelement und eine dritte Kulissenbahn für ein hinteres Gleitelement an einem Schlitten und eine zweite Kulissenbahn an der Führungsschiene angeordnet sind, ist aus der EP 1 314 600 A1 bekannt. Die Abstützung im vorderen Bereich erfolgt dort durch ein einziges Gleitelement, das mit der ersten und zweiten Kulissenbahn im Eingriff steht. Die Abstützung im hinteren Bereich erfolgt durch einen schwenkbaren Hebel, der mit einem Gleitelement mit der dritten Kulissenbahn in Eingriff steht.

Aus der WO 02/096685 A2 ist ein Fahrzeugdach bekannt, bei dem ein vorderer Schwenkmechanismus eines Deckels von zwei benachbart zueinander an einem Schlitten ausgebildeten Kulissenbahnen und zwei darin eingreifenden, an einem Deckelinnenblech angeordneten Pins gebildet wird.

Aufgabe der Erfindung ist es, ein Fahrzeugdach zu schaffen, das eine schmal bauende, einfache und sichere Abstützung des Deckels in allen Bewegungsphasen gewährleistet.

Diese Aufgabe wird durch ein Fahrzeugdach mit den Merkmalen des Anspruchs 1 gelöst. Vorteilhafte Ausgestaltungen der Erfindung sind in den Unteransprüchen angegeben.

Das erste und das zweite Gleitelement sind im vorderen Bereich des Deckelträgers angeordnet. Dadurch lässt sich die Bewegung der Deckelvorderkante derart steuern, dass diese beim Öffnen leicht anhebt und leicht nach hinten verlagert wird, so dass keine Kollision mit der vorderen Dichtung eintritt. Für eine besonders sichere Abstützung und um die Deckelhinterkante bedarfsgerecht zu steuern, umfasst die Kulissenanordnung ein drittes Gleitelement, das in einer dritten Kulissenbahn geführt ist. Bevorzugt ist das dritte Gleitelement im hinteren Bereich des Deckelträgers angeordnet.

In der Projektion in Querrichtung des Fahrzeugs überkreuzen sich die Kulissenbahn für das erste Gleitelement und das zweite Gleitelement in einer bevorzugten Variante.

Das erste Gleitelement und das zweite Gleitelement sind in einer besonders Platz sparenden Ausführungsform auf unterschiedlichen Seiten des sie tragenden Bauteils ausgebildet.

Der Deckel kann sowohl Bestandteil eines festen Fahrzeugdachs sein als auch Bestandteil eines Cabriolet-Verdecks, welches bevorzugt ausschließlich aus festen Elementen aufgebaut ist. Ein derartiges Festelement-Cabrio ist allgemein aus der DE 197 13 347 C1 bekannt.

Nachfolgend wird ein Ausführungsbeispiel des erfindungsgemäßen Fahrzeugdaches unter Bezugnahme auf die Zeichnungen näher erläutert. Es zeigt:
- Fig. 1: eine schematische perspektivische Ansicht eines Fahrzeugdaches mit geschlossenem Deckel,
- Fig. 2: das Fahrzeugdach gemäß Fig. 1 mit geöffnetem Deckel,
- Fig. 3: einen Teil-Längsschnitt des Fahrzeugdaches im Bereich einer seitlichen Führung bei geschlossenem Deckel,
- Fig. 4: einen Teil-Längsschnitt bei ausgestelltem Deckel,
- Fig. 5: einen Teil-Längsschnitt bei nach hinten verschobenem Deckel,
- Fig. 6: einen Teilquerschnitt gemäß der Schnittlinie VI-VI in Fig. 3 und
- Fig. 7: einen Teilquerschnitt gemäß der Schnittlinie VII-VII in Fig. 3.

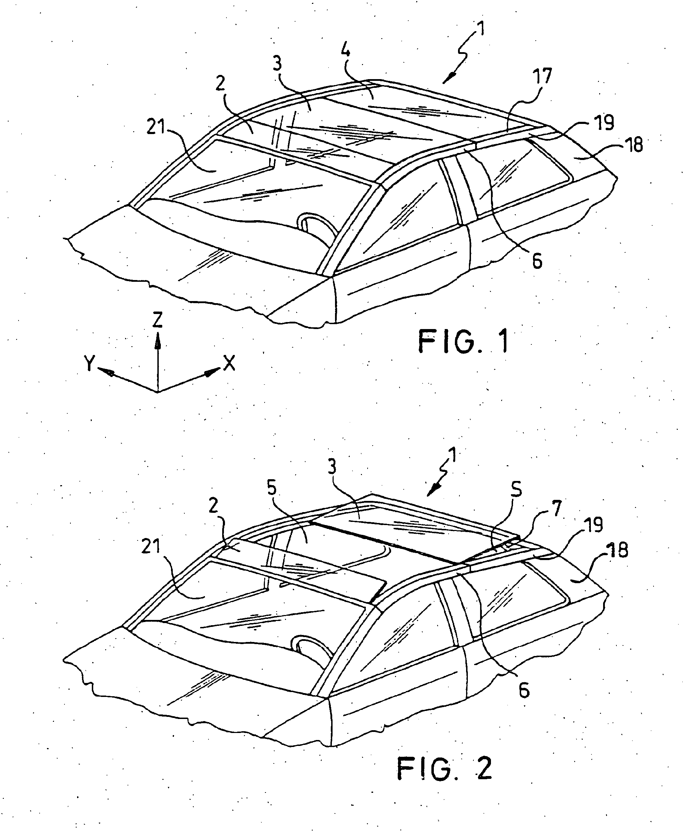

Ein in Fig. 1 dargestelltes Fahrzeugdach 1 setzt sich anschließend an die Oberkante einer Frontscheibe 21 aus einer Windabweislamelle 2, einem Deckel 3, einem nach hinten daran anschließenden hinteren Dachteil 4, und aus die Windabweislamelle 2 und den Deckel 3 seitlich begrenzenden Seitenholmen 6 und einer hinteren Dachkassette 19 zusammen, welche das hintere Dachteil 4 umgibt.

Das Fahrzeugdach 1 ist in diesem Beispiel als Festelement-Cabrio ausgebildet, bei dem der Deckel 3 über das hintere Dachteil 4 gefahren werden kann und bei dem nach Anschwenken der Seitenholme 6 das Paket aus Deckel 3, hinterem Dachteil 4, Dachkassette 19 und C-Säulen 18 in einen nicht dargestellten Stauraum im hinteren Teil des Fahrzeugs abgelegt werden kann. Die Erfindung ist jedoch ebenso für einen außen geführten Deckel 3 in einem festen Fahrzeugdach geeignet.

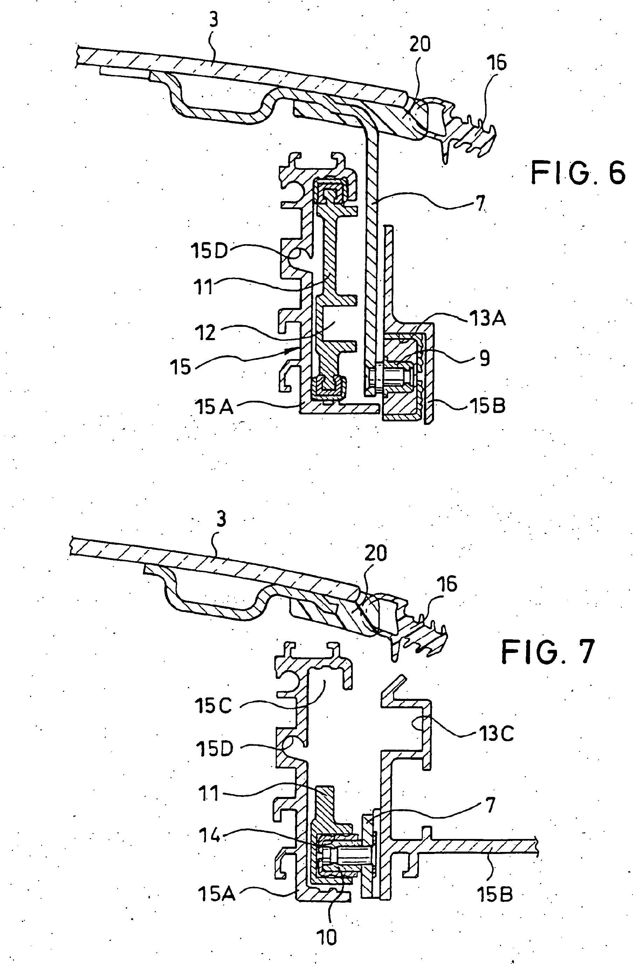

Die optional vorgesehene Windabweislamelle 2 ist vorzugsweise unabhängig von der Position des Deckels 3 in eine Lüfterposition gemäß Fig. 2 ausstellbar. Der Deckel 3 ist zu beiden Seiten mit einem Deckelträger 7 verbunden, der mit der Innenseite des Deckels 3 verbunden ist und sich nahe der seitlichen Außenkanten des Deckels 3 etwa im rechten Winkel vertikal nach unten erstreckt (siehe Fig. 6). Der Deckelträger 7 dient vorzugsweise bei ausgestellter Deckelhinterkante gleichzeitig als seitliche Blende zur Abdeckung des dreieckförmigen seitlichen Spaltes S (siehe Fig. 2). Der Deckel 3 weist an seiner Außenkante eine Dichtung 16 zur dichtenden Anlage am Rand der Dachöffnung 5 auf. Die Dichtung 16 kann jedoch auch, wie gezeigt, am Rand der Dachöffnung 5 befestigt sein, so dass ein angespritzter Kunststoffrand 20 am Deckel 3 an der Dichtung 16 anliegt.

Am Deckelträger 7 sind insgesamt drei Gleitelemente 8, 9, 10 angeordnet. Die drei Gleitelemente 8, 9, 10 sind jeweils drehbar mittels einer Schwenkachse am Deckelträger 7 gelagert. Sie sind etwa auf der gleichen Höhe, d. h. im selben Abstand zum Deckel 3 nahe der Unterkante des Deckelträgers 7 angeordnet.

Das erste Gleitelement 8 ist hinter einem zweiten Gleitelement 9 in geringem Abstand zu diesem angeordnet, während sich das dritte Gleitelement 10 etwa im hinteren Drittel des Deckels 3 befindet.

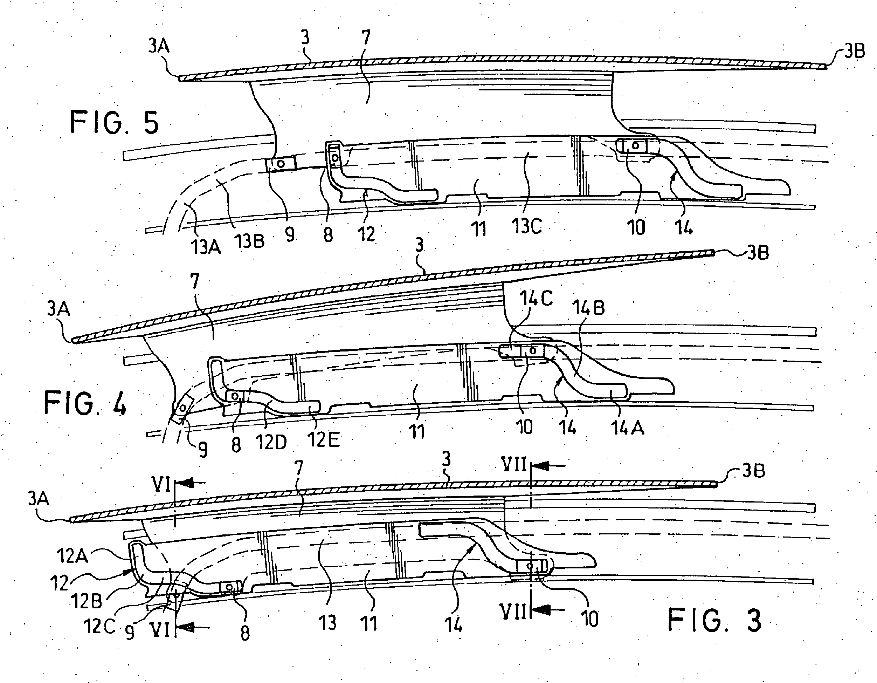

An sich seitlich der Dachöffnung 5 erstreckenden Führungsschienen 15, von denen in den Fig. 3 bis 7 nur eine dargestellt ist, ist jeweils ein Schlitten 11 verschiebbar geführt. Zu diesem Zweck weist die Führungsschiene 15 einen Führungskanal 15 C auf. Der Schlitten 11 wird in bekannter Weise mittels eines an ihm befestigten Antriebskabels mittels eines nicht dargestellten Elektromotors bewegt. Das Antriebskabel selbst ist nicht dargestellt; es wird in dem in Fig. 6 und 7 dargestellten Kabelkanal 15D zug- und drucksteif geführt.

Am Schlitten 11 ist im vorderen Bereich eine erste Kulissenbahn 12 ausgebildet, in welche das erste Gleitelement 8 eingreift. Die Kulissenbahn 12 weist einen ersten in etwa vertikal angeordneten Bahnabschnitt 12A, einen sich nach unten daran anschließenden gebogenen Bahnabschnitt 12B, einen sich an diesen nach hinten anschließenden in etwa horizontalen Bahnabschnitt 12C, einen daran anschließenden nach hinten abfallenden Bahnabschnitt 12D und einen unteren in etwa horizontalen Bahnabschnitt 12E auf. Beim Verschieben des Schlittens 11 nach hinten durchläuft das erste Gleitelement 8 ausgehend von der in Fig. 3 dargestellten Schließposition des Deckels 3 nacheinander die Bahnabschnitte 12E, 12D, 12C, 12B und 12A.

An der Führungsschiene 15, die sich - wie in Fign. 6 und 7 erkennbar - aus einem näher am Rand der Dachöffnung 5 angeordneten inneren Profilteil 15A und einem näher am Seitenholm 6 angeordneten äußeren Profilteil 15B zusammensetzt, ist am äußeren Profilteil 15B eine zweite Kulissenbahn 13 ausgebildet. Die Kulissenbahn 13 setzt sich aus einem vorderen, steil nach hinten ansteigenden Bahnabschnitt 13A, einem schwächer nach hinten ansteigenden Bahnabschnitt 13B und einem nach hinten verlaufenden in etwa horizontalen Bahnabschnitt 13C zusammen. Mit der Kulissenbahn 13 steht das zweite Gleitelement 9 im Eingriff. Beim Verschieben des Schlittens 11 nach hinten durchläuft das zweite Gleitelement 9 ausgehend von der in Fig. 3 dargestellten Schließposition des Deckels 3 nacheinander die Bahnabschnitte 13A, 13B und 13C.

Nahe dem hinteren Ende des Schlittens 11 ist an diesem auf der dem äußeren Profilteil 15B zugewandten Seite eine dritte Kulissenbahn 14 ausgebildet. Diese setzt sich von hinten nach vorne aus einem unteren, in etwa horizontalen Bahnabschnitt 14A, einem schräg nach vorn ansteigenden Bahnabschnitt 14B und einem vorderen, in etwa horizontalen Bahnabschnitt 14C zusammen. In die dritte Kulissenbahn 14 greift das dritte Gleitelement 10 ein. Beim Verschieben des Schlittens 11 nach hinten durchläuft es nacheinander die Bahnabschnitte 14A, 14B und 14C.

In den Fign. 3 bis 5 ist der Bewegungsablauf des Deckels 3, ausgehend von der Schließposition des Deckels 3 in Fig. 3, über die Ausstell-Position gemäß Fig. 4 bis zur Verschiebe-Position gemäß Fig. 5 gezeigt. Dabei wird das Zusammenspiel der Gleitelemente 8, 9 und 10 mit den Kulissenbahnen 12, 13 und 14 deutlich. Die Gleitelemente 8, 9 und 10 sind in ihren Kulissenbahnen 12, 13 und 14 jeweils so eng geführt, dass eine Krümmung einer Kulissenbahn dem jeweiligen Gleitelement bei einer Verschiebung des Schlittens 11 eine Drehung aufzwingt.

In geschlossener Position des Deckels 3 liegt das erste Gleitelement 8 am hinteren Ende des horizontalen Bahnabschnitts 12E der ersten Kulissenbahn 12. Gleichzeitig liegt das zweite Gleitelement 9 am unteren Ende des vorderen Bahnabschnitts 13A der zweiten Kulissenbahn 13. Das dritte Gleitelement 10 liegt am hinteren Ende des hinteren Bahnabschnitts 14A der dritten Kulissenbahn 14. Der Deckel 3 wird in dieser Position durch die durch die Bahnabschnitte 12E bzw. 14A horizontal ausgerichteten Gleitelemente 8 bzw. 10 in vertikaler Richtung abgestützt. Er wird gleichzeitig durch das aufgrund des starken vertikalen Verlaufs des Bahnabschnitts 13 A der zweiten Kulissenbahn 13 annähernd vertikal ausgerichtete zweite Gleitelement 9 an einer Verschiebung nach hinten gehindert.

Bei einer Verschiebung des Schlittens 11 nach hinten zum Einleiten einer Ausstellbewegung des Deckels 3 mit seiner Hinterkante 3B durchläuft das erste Gleitelement 8 den schwach ansteigenden Bahnabschnitt 12D und den in etwa horizontal verlaufenden mittleren Bahnabschnitt 12C. Gleichzeitig durchläuft das dritte Gleitelement 10 den stark ansteigenden Bahnabschnitt 14B und den Anfangsbereich des in etwa horizontalen Bahnabschnitts 14C. Dabei wird der Deckel 3 mit seiner Hinterkante 3B stark angehoben, während die Vorderkante 3A des Deckels 3 leicht angehoben wird, um zu vermeiden, dass die Deckelvorderkante 3A zu stark nach vorne oder unten eintaucht und dabei mit einer Dichtung im Bereich des vorderen Randes der Dachöffnung 5 kollidiert. Die Bewegungen der Gleitelemente sind vielmehr so aufeinander abgestimmt, dass die Deckelvorderkante 3A stets in Anlage an dieser Dichtung bleibt, ohne sie zu stark zu komprimieren. Das zweite Gleitelement 9 wandert dabei im vorderen Bahnabschnitt 13 A nach oben, behält jedoch seine überwiegend vertikale Ausrichtung, so dass der Deckel 3 nur eine der Ausstellbewegung überlagerte leichte Verlagerung nach hinten erfährt, die durch die Schrägstellung des Bahnabschnitts 13 A ermöglicht wird, im übrigen jedoch weiterhin gegen eine Verschiebung nach hinten blockiert ist.

Beim Übergang von der Ausstell-Position gemäß Fig. 4 in die Verschiebe-Position gemäß Fig. 5 durchläuft das erste Gleitelement 8 den gebogenen Bahnabschnitt 12B, während das zweite Gleitelement 9 gleichzeitig den ansteigenden Bahnabschnitt 13B durchläuft. Das erste Gleitelement 8 wird dadurch von seiner horizontalen Position, in der es den Deckel 3 in vertikaler Richtung stützt, in eine vertikale Position gedreht, in der es eine Relativbewegung zwischen dem Schlitten 11 und dem Deckelträger 7 in horizontaler Richtung verhindert. Gleichzeitig dazu gibt das zweite Gleitelement 9, je mehr es von einer überwiegend vertikalen Position in eine mehr der Horizontalen angenäherte Position gedreht wird, die Blockade einer Verschiebung des Deckelträgers 7 nach hinten auf und übernimmt gleichzeitig mehr und mehr die Abstützung des Deckels 3 im vorderen Bereich in vertikaler Richtung. Bei vollständigem Erreichen der Verschiebe-Position gemäß Fig. 5 steht das erste Gleitelement 8 vertikal am oberen Ende des Bahnabschnitts 12A. Das dritte Gleitelement 10 liegt nahezu am vorderen Ende des vorderen Bahnabschnitts 14C. Das zweite Gleitelement 9 gleitet im horizontalen Bahnabschnitt 13C längs der Führungsschiene 15 nach hinten. Durch das Anheben des ersten Gleitelements 8 und des zweiten Gleitelements 9 beim Übergang von Fig. 4 zu Fig. 5 wird die Deckelvorderkante 3A angehoben, so dass die Neigung des Deckels 3 beim Verschieben nach hinten flacher ist als in der Ausstell-Position. Hierdurch werden der Windwiderstand und die Geräuschbildung bei geöffnetem Deckel 3 vermindert und der Kontakt zwischen Deckel 3 und Dichtung aufgehoben.

Durch das Zusammenwirken der beiden Gleitelemente 8 und 9 mit den Kulissenbahnen 12 und 13 wird der Deckel 3 in der Schließposition gemäß Fig. 3 und in der Ausstell-Position gemäß Fig. 4 durch das Gleitelement 9 gegen ein Verschieben nach hinten gesichert und gleichzeitig durch das Gleitelement 8 in vertikaler Richtung abgestützt. Beim Übergang von der Ausstell-Position in die Verschiebe-Position wechseln die beiden Gleitelemente 8 und 9 ihre Rolle. Das Gleitelement 9 übernimmt die vertikale Abstützung des Deckels 3 im vorderen Bereich und das Gleitelement 8 verriegelt den Deckelträger 7 mit dem Schlitten 11, so dass eine zwangsweise Mitnahme des Deckels 3 nach hinten erfolgt.

Im Gegensatz zu anderen bekannten Mechaniken für ein Ausstellen und Verschieben eines Deckels kann bei der Erfindung auf ein zusätzliches Riegelelement völlig verzichtet werden, welches dort eine Verschiebung des Deckels nach hinten in der Schließposition und der Ausstell-Position blockiert. Die erfindungsgemäße Mechanik ist einfach, robust und sehr schmal (in Y-Richtung) aufgebaut und kostengünstig herstellbar, da sie auf zusätzliche Ausstell- oder Stützhebel und die dafür notwendige Mechanik vollständig verzichtet.

### Bezugszeichenliste

- 1: Fahrzeugdach
- 2: Windabweislamelle
- 3: Deckel
- 3A: Deckelvorderkante
- 3B: Deckelhinterkante
- 4: hinteres Dachteil
- 5: Dachöffnung
- 6: Seitenholm
- 7: Deckelträger
- 8: erstes Gleitelement
- 9: zweites Gleitelement
- 10: drittes Gleitelement
- 11: Schlitten
- 12: erste Kulissenbahn
- 12A: vertikaler Bahnabschnitt
- 12B: gebogener Bahnabschnitt
- 12C: horizontaler Bahnabschnitt
- 12D: abfallender Bahnabschnitt
- 12E: horizontaler Bahnabschnitt
- 13: zweite Kulissenbahn
- 13A: vorderer Bahnabschnitt
- 13B: ansteigender Bahnabschnitt
- 13C: horizontaler Bahnabschnitt
- 14: dritte Kulissenbahn
- 14A: hinterer Bahnabschnitt
- 14B: ansteigender Bahnabschnitt
- 14C: vorderer Bahnabschnitt
- 15: Führungsschiene
- 15A: inneres Profilteil
- 15B: äußeres Profilteil
- 15C: Führungskanal (für 11)
- 15D: Kabelkanal
- 16: Dichtung
- 17: Führungskanal
- 18: C-Säulen
- 19: Dachkassette
- 20: Kunststoffrand
- 21: Frontscheibe
- S: Spalt (seitlich an 3)

## Patentansprüche

1. Fahrzeugdach mit einem Deckel (3), der durch einen längs Führungsschienen (15) verschiebbaren Schlitten (11) im Zusammenwirken mit einem mit dem Deckel (3) verbundenen Deckelträger (7) über eine Kulissenanordnung, die wenigstens eine Kulissenbahn (12, 13, 14) und ein darin eingreifendes Gleitelement (8, 9, 10) aufweist, mit seiner Hinterkante (3B) ausstellbar und in der ausgestellten Position verschiebbar ist, wobei die Kulissenanordnung zwei Kulissenbahnen (12, 13) und zwei darin eingreifende Gleitelemente (8, 9) aufweist, die im vorderen Bereich des Deckelträgers (7) angeordnet sind und die derart geformt und angeordnet sind, dass bei einer Bewegung des Schlittens (11) zunächst ein erstes Gleitelement (8) eine Abstützung des Deckels (3) in Richtung der Höhe des Fahrzeugdachs (Z-Richtung) übernimmt, während ein zweites Gleitelement (9) im wesentlichen eine Abstützung in der Längsrichtung des Fahrzeugs (X-Richtung) ausübt und dass bei fortgesetzter Verschiebung des Schlittens (11) eine Umkehr der Abstützwirkung beider Gleitelemente (8 bzw. 9) erfolgt, wobei die Kulissenbahn (12) für das erste Gleitelement (8) am Schlitten (11) ausgebildet ist und die Kulissenbahn (13) für das zweite Gleitelement (9) an der Führungsschiene (15) ausgebildet ist, und wobei die Kulissenanordnung ein drittes Gleitelement (10) umfasst, das in einer dritten Kulissenbahn (14) geführt ist, **dadurch gekennzeichnet, dass** die dritte Kulissenbahn (14) am Schlitten (11) ausgebildet ist und dass alle drei Gleitelemente (8, 9, 10) drehbar am Deckelträger (7) gelagert sind.

2. Fahrzeugdach nach einem der vorhergehenden Ansprüche, **dadurch gekennzeichnet, dass** die Kulissenbahnen (12 bzw. 13) für das erste Gleitelement (8) und das zweite Gleitelement (9) sich in einer Projektion in Y-Richtung, d.h. in Querrichtung des Fahrzeugs überkreuzen.

3. Fahrzeugdach nach Anspruch 1 oder 2, **dadurch gekennzeichnet, dass** das dritte Gleitelement (10) im hinteren Bereich des Deckelträgers (7) angeordnet ist.

4. Fahrzeugdach nach einem der Ansprüche 1 bis 3, **dadurch gekennzeichnet, dass** das erste Gleitelement (8) und das zweite Gleitelement (9) auf unterschiedlichen Seiten des sie tragenden Bauteils (7) ausgebildet sind.

5. Fahrzeugdach nach einem der Ansprüche 1 bis 4, **dadurch gekennzeichnet, dass** die Führungsschienen (15) an bewegbaren Seitenholmen (6) eines Cabriolet-Verdecks angeordnet sind und der Deckel (3) nach vollständigem Verschieben nach hinten als Teil eines gesamten Verdeckpakets (3, 4, 6, 18) absenkbar ist.

6. Fahrzeugdach nach einem der vorhergehenden Ansprüche, **dadurch gekennzeichnet, dass** der Deckelträger (7) so geformt ist, dass er bei ausgestelltem Deckel (3) als seitliche Blende den entstehenden dreieckförmigen Spalt (S) zumindest weitgehend verschließt.

## Claims

1. Vehicle roof with a cover (3) which can be deployed at its rear edge (3B) and can be displaced in the deployed position by means of a slide (11), which is displaceable along guide rails (15), in interaction with a cover support (7), which is connected to the cover (3), via a slotted guide arrangement which has at least one slotted guide track (12, 13, 14) and a sliding element (8, 9, 10) engaging therein, wherein the slotted guide arrangement has two slotted guide tracks (12, 13) and two sliding elements (8, 9) which engage therein, are arranged in the front region of the cover support (7) and are shaped and arranged in such a manner that, during a movement of the slide (11), first of all a first sliding element (8) takes over supporting the cover (3) in the direction of the height of the vehicle roof (Z direction) while a second sliding element (9) substantially provides support in the longitudinal direction of the vehicle (X direction), and in such a manner that, as the displacement of the slide (11) continues, the supporting action of the two sliding elements (8 and 9) is reversed, wherein the slotted guide track (12) for the first sliding element (8) is formed on the slide (11) and the slotted guide track (13) for the second sliding element (9) is formed on the guide rail (15), and wherein the slotted guide arrangement comprises a third sliding element (10) which is guided in a third slotted guide track (14), **characterized in that** the third slotted guide track (14) is formed on the slide (11), and **in that** all three sliding elements (8, 9, 10) are mounted rotatably on the cover support (7).

2. Vehicle roof according to one of the preceding claims, **characterized in that** the slotted guide tracks (12 and 13) for the first sliding element (8) and the second sliding element (9) cross over in a projection in the Y direction, i.e. in the transverse direction of the vehicle.

3. Vehicle roof according to Claim 1 or 2, **characterized in that** the third sliding element (10) is arranged in the rear region of the cover support (7).

4. Vehicle roof according to one of Claims 1 to 3, **characterized in that** the first sliding element (8) and the second sliding element (9) are formed on different sides of the component (7) supporting them.

5. Vehicle roof according to one of Claims 1 to 4, **characterized in that** the guide rails (15) are arranged on movable lateral struts (6) of a convertible top, and the cover (3), after being completely displaced to the rear, can be lowered as part of an overall convertible top assembly (3, 4, 6, 18).

6. Vehicle roof according to one of the preceding claims, **characterized in that** the cover support (7) is shaped in such a manner that, as a lateral panel, it at least substantially closes the triangular gap (S) arising when the cover (3) is deployed.

## Revendications

1. Toit de véhicule comprenant un couvercle (3), qui peut être sorti et coulissé avec son arête arrière (3B) dans la position sortie par un chariot (11) pouvant coulisser le long de rails de guidage (15) et coopérant avec un support de couvercle (7) connecté au couvercle (3) par le biais d'un agencement de coulisse, qui présente au moins une piste à coulisse (12, 13, 14) et un coulisseau (8, 9, 10) venant en prise dans celle-ci, l'agencement de coulisse présentant deux pistes à coulisse (12, 13) et deux coulisseaux (8, 9) venant en prise dans celles-ci, qui sont disposés dans la région avant du support de couvercle (7) et qui sont formés et disposés de telle sorte que dans le cas d'un déplacement du chariot (11), d'abord un premier coulisseau (8) assure un support du couvercle (3) dans la direction de la hauteur du toit du véhicule (direction Z), tandis qu'un deuxième coulisseau (9) exerce essentiellement un support dans la direction longitudinale du véhicule (direction X), et de telle sorte que lors du coulissement poursuivi du chariot (11), il se produise une inversion de l'effet de support des deux coulisseaux (8 et 9), la piste à coulisse (12) pour le premier coulisseau (8) étant réalisée sur le chariot (11) et la piste à coulisse (13) pour le deuxième coulisseau (9) étant réalisée sur le rail de guidage (15), et l'agencement de coulisse comprenant un troisième coulisseau (10), qui est guidé dans une troisième piste à coulisse (14), **caractérisé en ce que** la troisième piste à coulisse (14) est réalisée sur le chariot (11) et **en ce que** les trois coulisseaux (8, 9, 10) sont montés de manière rotative sur le support de couvercle (7).

2. Toit de véhicule selon l'une quelconque des revendications précédentes, **caractérisé en ce que** les pistes à coulisse (12 et 13) pour le premier coulisseau (8) et le deuxième coulisseau (9) se croisent dans une projection dans la direction Y, c'est-à-dire dans la direction transversale du véhicule.

3. Toit de véhicule selon la revendication 1 ou 2, **caractérisé en ce que** le troisième coulisseau (10) est disposé dans la région arrière du support de couvercle (7).

4. Toit de véhicule selon l'une quelconque des revendications 1 à 3, **caractérisé en ce que** le premier coulisseau (8) et le deuxième coulisseau (9) sont réalisés sur des côtés différents du composant (7) qui les porte.

5. Toit de véhicule selon l'une quelconque des revendications 1 à 4, **caractérisé en ce que** les rails de guidage (15) sont disposés sur des longerons latéraux déplaçables (6) d'une capote de cabriolet, et le couvercle (3) peut être abaissé après un coulissement complet vers l'arrière en tant que partie d'un module de capote complet (3, 4, 6, 18) .

6. Toit de véhicule selon l'une quelconque des revendications précédentes, **caractérisé en ce que** le support de couvercle (7) est formé de telle sorte qu'il ferme au moins essentiellement, en tant que bandeau latéral, la fente triangulaire (S) produite lorsque le couvercle (3) est sorti.
